# EUROPÄISCHE PATENTANMELDUNG

(11) **EP 1 722 461 A1**
(43) Veröffentlichungstag der Anmeldung: **15.11.2006**
(21) Anmeldenummer: 06113025.8
(22) Anmeldetag: 25.04.2006
(51) Int. Cl.: H02K 7/116

(54) **Elektrische Antriebsvorrichtung**

(30) Priorität: 13.05.2005 DE 102005023032
(71) Anmelder: Demag Ergotech GmbH, 90571 Schwaig (DE)
(72) Erfinder: Wessely, Ralph, 90559 Burgthann (DE)
(74) Vertreter: Wilhelm, Ludwig

(57) **Zusammenfassung**

Die vorliegende Erfindung betrifft eine elektrische Antriebsvorrichtung (1), die zumindest einen Elektromotor (4, 4', 30) mit jeweils einem Rotor (6, 6', 34) und mindestens zwei koaxiale Abtriebswellen (16, 24, 36, 46) umfasst, wobei die Abtriebswellen (16, 24, 36, 46) beim Betrieb des zumindest einen Elektromotors (4, 4', 30) mit unterschiedlichen Drehzahlen antreibbar sind.

Solche Antriebsvorrichtungen sind zumeist sehr aufwendig in der Konstruktion, weisen eine hohe Teilevielfalt auf, beanspruchen viel Platz und sind häufig unsymmetrisch belastet.

Die elektrische Antriebsvorrichtung gemäß der vorliegenden Erfindung umgeht diese Nachteile, indem die Abtriebswellen (16, 24, 36, 46) jeweils separat mit dem zumindest einen Rotor (6, 6', 34) gekoppelt oder koppelbar sind, wobei zumindest eine der Abtriebswellen (16, 24, 36, 46) über ein Getriebe (10, 18,42) mit dem zumindest einen Rotor (6, 6', 34) gekoppelt ist, welches keine unmittelbare Wirkverbindung zur jeweils anderen Abtriebswelle (16, 24, 36, 46) besitzt.

## Beschreibung

Die vorliegende Erfindung betrifft eine elektrische Antriebsvorrichtung gemäß den Merkmalen des Oberbegriffs des Anspruchs 1. Solche elektrische Antriebsvorrichtungen umfassen zumindest einen Elektromotor, der jeweils einen Rotor aufweist, und mindestens zwei koaxiale Abtriebswellen, wobei die Abtriebswellen beim Betrieb des zumindest einen Elektromotors mit unterschiedlichen Drehzahlen antreibbar sind. Sie können insbesondere auch bei Spritzgießmaschinen zum Einsatz kommen, wobei eine der Abtriebswellen hier bevorzugt zum rotatorischen Antreiben einer Plastifizierschnecke dient.

Aus dem Stand der Technik ist es bereits bekannt, mehrere Motoren geringer Leistungsaufnahme derart zu kombinieren, dass ein relativ großes Drehmoment übertragen werden kann. Eine solche Anordnung ist beispielsweise aus der US 5,463,914 bekannt, die beschreibt, wie schnelllaufende Miniaturmotoren bei entsprechender Parallelschaltung und Untersetzung ein hohes Drehmoment erzeugen können, wie es in elektrischen Haushaltsgeräten benötigt wird.

Auch aus der EP 1 319 866 A1 ist ein Getriebemotor bekannt, der mehrere Elektromotoren umfasst, deren Ausgangswelle jeweils mit einem Antriebsritzel verbunden ist. Diese Antriebsritzel sind symmetrisch zu einem zentralen Abtriebsrad angeordnet, das auf einer Getriebewelle angebracht ist. Bei einem solchen Getriebemotor sehr kompakten Aufbaus lässt sich ein hohes Abtriebsdrehmoment erhalten. Mit dem aus Antriebsritzeln und Abtriebszahnrad bestehenden Getriebe ist eine Untersetzung bis i=12 in einer einzigen Stufen erzielbar. Es ist auch bekannt, den dort geschilderten Getriebemotor mit zwei koaxialen Abtriebswellen zu betreiben, wobei ein Teil der Elektromotoren mit einer ersten Getriebewelle gekoppelt ist, während die anderen Elektromotoren mit der zweiten Getriebewelle gekoppelt sind. Hierdurch können durch den einen Getriebemotor zwei Wellen unabhängig voneinander mit unterschiedlicher Drehzahl bzw. Untersetzung betrieben werden. Nachteilig hieran ist die ungleiche Belastung der Getriebemotoranordnung mit den mehreren Elektromotoren, da diese unterschiedlich und unabhängig voneinander betrieben werden, zudem kann nur ein geringeres Drehmoment erzeugt werden, da nicht alle Elektromotoren auf eine einzige Abtriebswelle wirken. Werden mehrere Abtriebswellen benötigt, auf die ein hohes Drehmoment übertragbar ist, so müssen mehrere solche Getriebemotoren zum Einsatz kommen.

Aufgabe der vorliegenden Erfindung ist es deshalb, eine kompakte elektrische Antriebsvorrichtung mit geringem Platzbedarf vorzustellen, bei gleichzeitig geringer Teilevielfalt und einfachem Aufbau. Eine möglichst gleichmäßige Beanspruchung der Antriebsvorrichtung im Betrieb soll gewährleistet sein.

Diese Aufgabe wird durch eine elektrische Antriebsvorrichtung gemäß den Merkmalen des Patentanspruchs 1 gelöst.

Vorteilhaft an einer solchen elektrischen Antriebsvorrichtung ist, dass mindestens zwei koaxiale Abtriebswellen mit unterschiedlichen Drehzahlen antreibbar sind, wobei die jeweiligen Abtriebswellen separat mit dem zumindest einen Rotor des vorgesehen Elektromotors gekoppelt oder koppelbar sind. Mit zumindest einer der Abtriebswellen ist der mindestens eine Rotor über ein Getriebe gekoppelt, so dass die Abtriebswellen mit unterschiedlichen Drehzahlen bzw. unterschiedlichen Unter-/Übersetzungen betreibbar sind, wobei dieses Getriebe keine unmittelbare Wirkverbindung zur jeweils anderen Abtriebswelle besitzt. Somit dient das mindestens eine Getriebe nur dem Antrieb einer Abtriebswelle, ohne gleichzeitig auch kraftschlüssig mit der mindestens einen anderen Abtriebswelle verbunden zu sein. Diese Trennung der Ankopplung der Abtriebswellen hat sich als besonders vorteilhaft erwiesen, hierdurch lässt sich effektiv auch ein meist bei Verwendung von in Wirkverbindung stehenden Wellen vorhandener Achsversatz vermeiden.

Durch die koaxiale Führung der beiden Abtriebswellen, wobei jede der Abtriebswellen separat mit dem zumindest einen oder bei mehreren mit jedem der Rotoren gekoppelt bzw. koppelbar ist, kann eine optimale Drehmomentübertragung auf jede der Wellen bei möglichst symmetrischer Belastung der Antriebsvorrichtung und kompakter Bauweise erfolgen. Durch die solchermaßene Mehrfachnutzung des bzw. der Rotoren, bei der alle Rotoren auf alle Wellen wirken bzw. wirken können und nicht separate Elektromotoren für die verschiedenen Wellen vorgesehen sind, lässt sich die Teilevielfalt der erfindungsgemäß elektrischen Antriebsvorrichtung entsprechend reduzieren, bei gleichzeitig geringem Platzbedarf der Vorrichtung.

Gemäß einer vorteilhaften Weiterbildung der Erfindung ist als Elektromotor ein Hohlwellenantrieb vorgesehen. Hohlwellenantriebe sind in verschiedenen Ausführungen erhältlich, sie bauen kompakt und können große Drehmomente übertragen, insbesondere in den sogenannten "high torque" Ausführungen. Sie eignen sich besonders für den Einsatz im Bereich der Spritzgieß- und Extruderanwendungen.

Hohlwellenantriebe sind sowohl als fertig montierte Baugruppen erhältlich, bei denen der Stator in einem Gehäuse aufgenommen ist, der hohlwellenförmige Rotor kann im Stator bereits gelagert sein. Es ist aber auch möglich, die Einzelteile wie Rotor und Stator separat zu beziehen. Der Rotor kann beispielsweise auch außerhalb des Stators gelagert sein. Dadurch ergibt sich eine große Gestaltungsfreiheit und somit eine erhöhte Flexibilität im Hinblick auf die Einsatzmöglichkeiten.

Bevorzugterweise kann eine der Abtriebswellen auf bekannte Weise mit dem Rotor des Hohlwellenantriebs verbunden sein, beispielsweise durch eine direkte Ankopplung. Die mindestens eine andere Abtriebswelle kann über ein Getriebe mit dem Rotor gekoppelt oder koppelbar sein. Bei einer solchen Ausgestaltung besteht keine unmittelbare Wirkverbindung zwischen dem Getriebe und einer ersten mit dem Rotor verbundenen Abtriebswelle. Die Ausgestaltung der elektrischen Antriebsvorrichtung mit einem Hohlwellenantrieb als Elektromotor zeichnet sich durch eine besonders kompakte Bauweise aus.

Vorteilhafterweise kann mindestens eine der Abtriebswellen mit dem Rotor des Hohlwellenantriebs unter Zwischenschaltung eines Planetengetriebes verbunden sein. Dies ermöglicht es, eine Unter- oder eine Übersetzung des Hohlwellenantriebs zu erreichen. Planetengetriebe sind aus dem Stand der Technik hinlänglich bekannt. Die Planetenräder eines solchen Planetengetriebes können beispielsweise im wesentlichen innerhalb des Rotors bzw. innerhalb einer mit diesem fix verbundenen Hohlwelle vorgesehen sein und mit dieser über Verzahnungen im Eingriff stehen. Die Planetenräder können an einem Planetenträger drehbar gelagert sein und sich mit diesem um eine gemeinsame Achse drehen, dieser kann aber auch festgehalten werden, so dass das Drehmoment über ein mit den Planetenrädern im Eingriff stehendes Sonnenrad auf eine Abtriebswelle übertragbar ist.

Besonders bevorzugt können die Planetenräder des Planetengetriebes innerhalb des Rotors und einer ggf. zwischengeschalteten Hohlwelle ortsfest zu einem Stator des Hohlwellenantriebs gelagert sein. Durch sie ist beispielsweise ein mit den Planetenrädern im Eingriff stehendes Zahnrad, ein sogenanntes Sonnenrad, antreibbar, das mit einer der Abtriebswellen verbunden ist. So kann eine Abtriebswelle mit einer von der des Rotors unterschiedlichen Drehzahl angetrieben werden.

Gemäß einer anderen bevorzugten Ausgestaltungsform der Erfindung umfasst die elektrische Antriebsvorrichtung einen sogenannten Kompaktantrieb mit mehreren symmetrisch zu einer Mittelachse angeordneten Elektromotoren, wobei die Abtriebswellen bevorzugt koaxial zu der Mittelachse sind. Jeder Elektromotor weist eine mit seinem Rotor in Wirkverbindung stehende Ausgangswelle auf, die parallel zu der Mittelachse ausgerichtet ist. Ein solcher Kompaktantrieb ist beispielsweise aus der EP 1 319 866 A1 bekannt, auf die in diesem Zusammenhang insbesondere im Hinblick auf die konstruktive Ausgestaltung voll umfänglich verwiesen wird. Anders als aus dieser Druckschrift bekannt, können die mindestens zwei koaxialen Abtriebswellen mit allen Rotoren der Elektromotoren koppelbar bzw. gekoppelt sein. Eine Abtriebswelle kann also von allen Elektromotoren angetrieben werden. Die mindestens zwei Abtriebswellen sind jeweils über Getriebe mit den Rotoren verbunden bzw. verbindbar, die jeweils keine unmittelbare Wirkverbindung zu einer anderen Abtriebswelle besitzen. So können durch einen Kompaktantrieb, der beispielsweise vier symmetrisch zu einer Mittelachse in Form eines Quadrats angeordnete Elektromotoren aufweist, mindestens zwei Abtriebswellen mit unterschiedlichen Drehzahlen gleichzeitig betrieben werden.

Dies schafft einen sehr kompakten, multifunktionalen Antrieb, der mit einer Mindestzahl an Bauteilen auskommt und nur geringen Einbauraum beansprucht. So kann ein hoher Wirkungsgrad bei relativ geräuscharmem Betrieb aufgrund geringerer Umfangsgeschwindigkeiten bereitgestellt werden. Da das Antriebsdrehmoment der einzelnen Elektromotoren vereinigt wird, lässt sich ein hohes Antriebsdrehmoment erzielen, gleichzeitig ergibt sich eine sehr hohe Leistungsdichte, da das Gesamtdrehmoment der mehreren, beispielsweise vier, einzelnen Elektromotoren sehr viel größer ist als das Drehmoment, das ein einzelner Elektromotor bereitstellen könnte, der in einem Gehäuse derselben Abmessungen unterbringbar wäre. Durch die symmetrische Anordnung der einzelnen Elektromotoren um die koaxialen Abtriebswellen, im Falle von vier Elektromotoren beispielsweise an den Eckpunkten eines gleichseitigen Vierecks, das die Achse der Abtriebswellen als Mittelpunkt hat, ist zudem der Raum entlang dieser Abtriebswellen im Gehäuse nicht verbaut, so dass die Abtriebswellen gegebenenfalls besser zugänglich sind.

Gemäß einer bevorzugten Ausgestaltung kann jeder Abtriebswelle ein Getriebe unterschiedlicher Übersetzung zugeordnet sein, über das alle Ausgangswellen der Elektromotoren, die mit den jeweiligen Rotoren in Wirkverbindung stehen, mit den mindestens zwei Abtriebswellen gekoppelt oder koppelbar sind. Hier bietet es sich beispielsweise an, auf den Ausgangswellen Ritzel vorzusehen, die jeweils mit einem mit der jeweiligen Abtriebswelle verbundenen Sonnenrad im Eingriff stehen. Hierbei können die Ausgangswellen der Elektromotoren jeweils mit den Rotoren und mit zumindest ersten und zweiten zugeordneten Antriebsritzeln unterschiedlichen Durchmessers kraftschlüssig verbunden sein, die jeweils mit über Sonnenräder, die ebenfalls unterschiedliche Durchmesser aufweisen, mit den mindestens zwei Abtriebswellen koppelbar sind. Die Verbindbarkeit aller Ausgangswellen der Elektromotoren mit den jeweiligen Abtriebswellen hat sich als vorteilhaft erwiesen, da eine möglichst gleichmäßige Belastung der Elektromotoren und der Wellen bzw. Getriebe gewährleistet werden kann.

Abhängig vom Einsatzbereich kann es von Vorteil sein, eines oder mehrere der Getriebe, über die die Abtriebswellen mit den Rotoren der Elektromotoren in Wirkverbindung stehen, zwei- oder mehrstufig auszuführen. So können beispielsweise die ersten Antriebsritzel paarweise mit zwei Zwischenzahnrädern verbunden sein, die auf je einer Zwischenwelle angebracht sind, so dass mit dieser ebenfalls verbundene Zwischenritzel in das mittig angeordnete Sonnen- bzw. Abtriebszahnrad einer Abtriebswelle eingreifen können. Hierdurch kann das erzielbare Drehmoment gegenüber bekannten Konstruktionen um einen Faktor zwei erhöht werden.

Besonders bevorzugt an der erfindungsgemäßen elektrischen Antriebsvorrichtung ist, dass ein einziger Frequenzumrichter für den Antrieb mehrerer Abtriebswellen ausreichend ist. Dieser Frequenzumrichter ist von allen Einzelmotoren insbesondere im Fall einer Anordnung mehrerer Elektromotoren gleichzeitig nutzbar, es müssen zum Antreiben der mindestens zwei Abtriebswellen nicht verschiedene Frequenzumrichter vorgesehen sein. Hierdurch kann eine weitere Kostenreduzierung erfolgen. Es ist also möglich, zwei Abtriebswellen mit unterschiedlichen Drehzahlen und unterschiedlichen Drehmomenten bei Verwendung nur eines einzigen Frequenzumrichters anzutreiben.

Bevorzugterweise kann mindestens eine der Abtriebswellen als Hohlwelle ausgebildet sein. Dies ermöglicht es beispielsweise, beide Abtriebswellen nach einer Seite aus der elektrischen Antriebsvorrichtung herauszuführen und gewährleistet zudem eine bessere Zugänglichkeit. Vorteilhafterweise können in diesem Fall bei einem Kompaktantrieb Antriebsritzel, die mit den Motorwellen kraftschlüssig verbunden sind, auf einer gemeinsamen Motorwelle axial gegeneinander versetzt angeordnet sein und einen unterschiedlichen Durchmesser aufweisen. Auch im Falle der Benutzung eines Hohlwellenantriebs kann eine Anordnung der beiden Abtriebswellen ineinander vorgesehen sein, wobei vorteilhafterweise eine Abtriebswelle direkt mit dem Rotor des Hohlwellenantriebs verbunden ist, während in ihr eine weitere Abtriebswelle über einem Planetengetriebe drehbar gelagert ist.

Eine als Hohlwelle ausgebildete Abtriebswelle kann beispielsweise über eine Spindelmutter mit einem als Spindel ausgeführten Bereich einer Welle in Verbindung stehen, die in einem anderen Bereich über ein Keilnutenprofil mit einem weiteren Getriebe axial verschieblich antreibbar ist. So kann auf eine Welle einerseits eine Rotationsbewegung und andererseits eine Linearbewegung übertragen werden. Die räumliche Ausdehnung der elektrischen Antriebsvorrichtung lässt sich so weiter reduzieren.

Ebenso ist es möglich, die mindestens zwei Abtriebswellen im Betrieb nach verschiedenen Seiten der elektrischen Antriebsvorrichtung kraftübertragend vorzusehen. Dies kann beispielsweise beim Einsatz in hybriden Einspritzeinheiten zum Spritzgießen von thermoplastischen Materialien von Vorteil sein, in denen sich eine derartige Antriebsvorrichtung sowohl zum Antreiben einer Plastifizierbewegung einer Schnecke als auch einer Vorrichtung zum Bereitstellen des Hydraulikdrucks für die Einspritzbewegung nutzen lässt. Da kein Achsversatz zwischen beiden Abtriebswellen auftritt, kann eine solche Einheit besonders platzsparend eingesetzt werden, die modulare Austauschbarkeit ist hierdurch erleichtert.

Ebenso wäre es möglich, zwei Abtriebswellen nach einer Seite und eine dritte Abtriebswelle nach einer anderen Seite der elektrischen Antriebsvorrichtung kraftübertragend auszubilden. In diesem Falle wäre auf der Seite der beiden Abtriebswellen eine derselben als Hohlwelle ausgebildet.

Besonders bevorzugt ist eine Ausgestaltung der vorliegenden Erfindung, bei der ein oder mehrere Freiläufe zwischen einer oder mehreren Abtriebswellen und dem zumindest einen Rotor vorgesehen sind. So können eine oder mehrere Abtriebswellen nur in Abhängigkeit von der Drehrichtung des zumindest einen Rotors der elektrischen Antriebsvorrichtung antreibbar sein. Dies ist von Vorteil, wenn beispielsweise entlang einer Abtriebswelle ein Drehmoment in beiden Richtungen übertragbar sein soll, während entlang einer anderen Abtriebswelle ein Drehmoment nur in einer bestimmten Richtung übertragen werden soll. Solche Freiläufe gehören an sich zum Stand der Technik.

Es ist auch möglich, einen oder mehrere weitere Freiläufe zwischen einer entsprechenden Abtriebswelle und beispielsweise einem zugehörigen ortsfesten Gehäuse der elektrischen Antriebsvorrichtung vorzusehen. So ist neben dem Unterbleiben einer Drehmomentübertragung in einer bestimmten Richtung gleichzeitig ein unkontrolliertes Verdrehen der in diesem Fall nicht angetriebenen Achse gegenüber dem Gehäuse verhinderbar. Über eine solche Abtriebswelle kann beispielsweise eine Plastifizierschnecke einer Plastifizier- und Einspritzeinheit antreibbar sein. Um ein mögliches Zurückdrehen einer solchen Plastifizierschnecke bei einem Einspritzvorgang, in dem die Plastifizierschnecke nicht weiter drehangetrieben ist, zu verhindern, kann ein weiterer Freilauf zwischen Abtriebswelle und einem drehfestem Motorgehäuse vorgesehen sein.

Mit der anderen Abtriebswelle kann beispielsweise eine Antriebswelle einer nicht näher dargestellten Pumpe oder eine Spindel im Eingriff stehen. Im Fall einer Pumpe kann besonders vorteilhaft eine Regelpumpe im 4-Quadrantenbetrieb zum Einsatz kommen, über die unabhängig von der Drehrichtung der Antriebswelle, gesteuert beispielsweise durch eine Schwenkscheibe mit positivem und negativem Schwenkbereich, sowohl gesaugt als auch gepumpt werden kann. In einer Nullstellung der Schwenkscheibe fördert eine solche Pumpe nicht. Eine solche Regelpumpe kann beispielsweise bei Plastifizier- und Einspritzeinheiten zur Versorgung von Einspritzzylindern vorgesehen und bei Betrieb der Antriebsvorrichtung durchgängig angetrieben sein. Besteht bei laufender Antriebsvorrichtung keine Druckanforderung im Spritzzylinder, ist die Schwenkscheibe der Pumpe in Nullstellung bringbar, so dass die Pumpe nicht fördert. Mit einer solchen Pumpe ist sowohl beim Plastifizieren ein Staudruck aufbaubar als auch bei entgegengesetzt drehender Abtriebswelle 16 ein Einspritzhub oder ein Schneckenrückzug fahrbar.

Besonders bevorzugt können der eine oder die mehreren erfindungsgemäß vorgesehenen Freiläufe schaltbar, gegebenenfalls auch nach Art einer schaltbaren Kupplung, ausgestaltet sein. Hierbei wird insbesondere an eine elektrische oder magnetische Schaltbarkeit gedacht. So ist es möglich, die Übertragung des Drehmoments gezielt zu beeinflussen, zeitweise also beispielsweise eine Drehbarkeit einer Abtriebswelle in beide Richtungen zuzulassen und erst später den Freilauf einzuschalten, der keine weitere Drehmomentübertragung erlaubt.

Die Vorteile der erfindungsgemäßen, elektrischen Antriebsvorrichtung, die mehrere Abtriebswellen ohne Achsversatz mit unterschiedlichen Drehzahlen bei Verwendung lediglich eines Frequenzumrichters mit hoher Leistungsdichte antreiben kann, sollen anhand der folgenden beispielhaften Figuren noch näher beschrieben werden. Es zeigen:
- **Fig. 1**:: einen Längsschnitt durch eine erfindungsgemäße elektrische Antriebsvorrichtung mit einem Kompaktantrieb und
- **Fig. 2:**: einen Längsschnitt durch eine erfindungsgemäße elektrische Antriebsvorrichtung mit einem Hohlwellenantrieb.

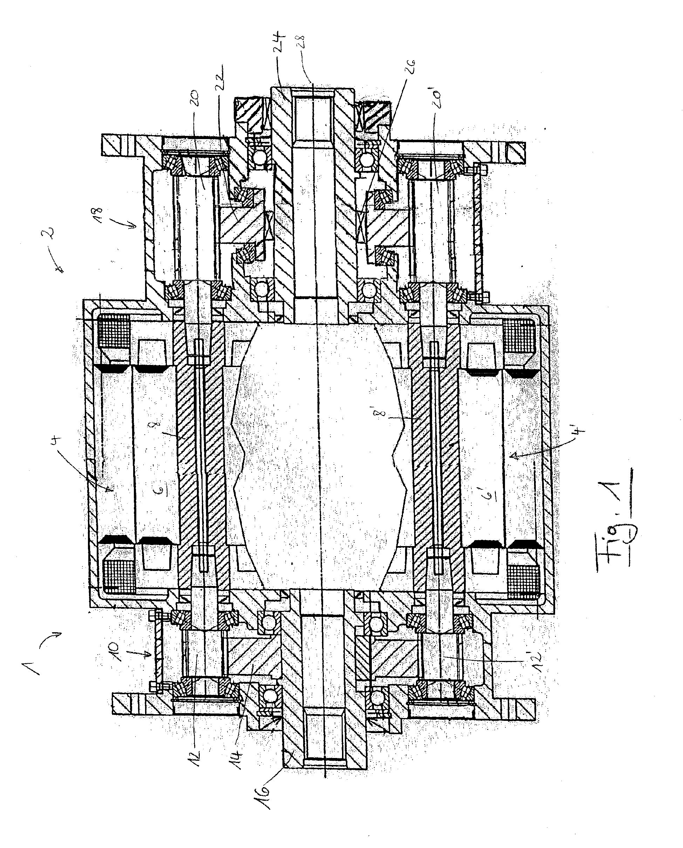

Fig. 1 zeigt schematisch einen Längsschnitt durch eine elektrische Antriebsvorrichtung 1 mit einem Kompaktantrieb 2 entlang einer Mittelachse 28. Elektromotoren 4, 4' sind symmetrisch zur Mittelachse 28 angeordnet, wobei bevorzugt vier Elektromotoren zum Einsatz kommen, die an den Ecken eines Quadrats angeordnet sind. Jeder Elektromotor 4, 4' weist einen Rotor 6, 6' auf, der auf einer Motorwelle 8, 8' drehbar gelagert ist. Die Motorwellen 8, 8' sind über Getriebe 10 und 18 mit einer ersten Abtriebswelle 16 und einer zweiten Abtriebswelle 24 koppelbar. Hierbei können stets alle Rotoren 6, 6' mit den Abtriebswellen gekoppelt werden.

Das erste Getriebe 10 weist erste Antriebsritzel 12, 12' auf, die mit den Motorwellen 8, 8' wirkverbunden sind und über eine Verzahnung im Eingriff mit einem ersten Sonnenrad 14 stehen, das mit einer ersten Abtriebswelle 16 wirkverbunden ist. Hierbei sind die Ritzel 12, 12' über Wälzlager axial fest aber drehbar gelagert. Die Abtriebswelle 16 ist über Kugellager und gegebenenfalls weitere Lager an einem Gehäuse des Motors drehbar gelagert. Die erste Abtriebswelle 16 kann auf ihrer Innenfläche ein Keilnutprofil aufweisen, das mit einem Keilwellenprofil zur kraftschlüssigen Übertragung der Drehbewegung verbindbar ist.

Mit der Abtriebswelle kann beispielsweise eine Antriebswelle einer nicht näher dargestellten Pumpe oder eine Spindel im Eingriff stehen.

Das zweite Getriebe 18 ist ähnlich zu dem ersten Getriebe 10 aufgebaut, und befindet sich, in Bezug auf die Elektromotoren 4, 4', auf einer dem ersten Getriebe 10 entgegengesetzten Seite. Es wäre aber auch denkbar, dieses zweite Getriebe 18 auf derselben Seite der Elektromotoren 4, 4' wie das erste Getriebe vorzusehen. In diesem Falle könnte beispielsweise eines der Getriebe auf eine mit einer Spindelmutter verbundene Hohlwelle wirken, die mit einer Spindelwelle im Eingriff steht, während das zweite Getriebe nach Art eines Keilwellenprofils mit der Abtriebswelle in Verbindung ist, das axial verschiebbar in dem zweiten Getriebe aufgenommen ist.

Das zweite Getriebe 18 weist zweite Antriebsritzel 20, 20' auf, die mit einem zweiten Sonnenrad 22 im Eingriff stehen. Dieses zweite Sonnenrad 22 ist unter Zwischenschaltung eines Freilaufs 26 mit der zweiten Abtriebswelle 24 verbunden, so dass die zweite Abtriebswelle 24 nur in einer Drehrichtung mit Drehmoment beaufschlagbar ist. So ist es beispielsweise denkbar, dass über eine solche Abtriebswelle eine Plastifizierschnecke einer Plastifizier- und Einspritzeinheit antreibbar ist. Um ein mögliches Zurückdrehen der Abtriebswelle 24 zu verhindern, kann ein weiterer Freilauf 27 zwischen Abtriebswelle 24 und einem drehfestem Motorgehäuse vorgesehen sein.

Ein solcher Kompaktantrieb 2 benötigt im Betrieb nur einen einzigen Frequenzumrichter, um erfindungsgemäß unterschiedliche Drehmomente auf zwei verschiedene Abtriebswellen zu übertragen.

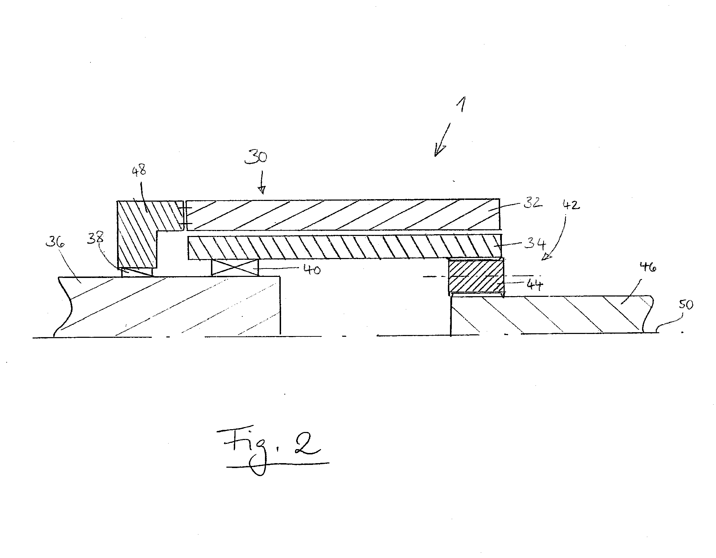

In Fig. 2 ist eine alternative Ausgestaltungsform der erfindungsgemäßen, elektrischen Antriebsvorrichtung 1 im Teilschnitt dargestellt. In einem Hohlwellenantrieb 30, der hier nur schematisch wiedergegeben ist, ist in einem Stator 32 ein Rotor 34 drehbar gelagert. Dieser kann ggf. an seiner Innenseite mit einer zusätzlichen Hohlwelle verbunden sein, die eine Innenverzahnung aufweist. Eine erste Abtriebswelle 36 ist über einen Freilauf 40 mit dem Rotor 34 des Hohlwellenantriebs 30 verbunden und in Abhängigkeit von der Drehrichtung des Rotors um eine Mittelachse 50 drehbar gelagert. Eine solche Lagerung ist nicht näher dargestellt. Zwischen der Abtriebswelle 36 und einem mit dem Stator 32 des Hohlwellenantriebs 30 verbundenen Lagerdeckel 48 ist ein weiterer Freilauf 38 vorgesehen. Durch diesen kann vermieden werden, dass sich die Abtriebswelle 36 bei freigegebenem Freilauf 40 in der Gegenrichtung relativ zu dem ortsfesten Stator 32 verdreht. Dies kann beispielsweise von Vorteil sein, wenn die Abtriebswelle 36 mit einer Plastifizierschnecke einer Plastifizier- und Einspritzeinheit verbunden ist, bei der nach erfolgtem Aufplastifizieren eine Zurückdrehung verhindert werden soll.

Auf der Gegenseite ist eine zweite Abtriebswelle 46, die ebenfalls um die Mittelachse 50 drehbar angeordnet ist, über ein Getriebe 42, das nach Art eines Planetengetriebes ausgebildet ist, mit dem Rotor 34 verbunden. Dieser steht über eine Innenverzahnung mit Planetenrädern 44 im Eingriff, die ihrerseits über entsprechende Verzahnung mit der zweiten Abtriebswelle 46 wirkverbunden sind oder aber über ein weiteres, hier nicht dargestelltes Sonnenrad mit der zweiten Abtriebswelle 46 verbunden sein können. Die Planetenräder 44 sind beispielsweise über einen - nicht dargestellten - Planetenradhalter ortsfest zum Stator 32 drehbar gelagert.

Mit dieser Anordnung können mittels eines Hohlwellenantriebs 30, der nur einen einzigen Frequenzumrichter benötigt, erfindungsgemäß unterschiedliche Drehmomente auf zwei verschiedene Abtriebswellen 36 und 46 übertragen werden, wobei eine dieser Wellen aufgrund des Freilaufs 40 nur in Abhängigkeit von der Drehrichtung des Rotors mit einem Drehmoment beaufschlagbar ist.

Eine erfindungsgemäße, elektrische Antriebsvorrichtung lässt sich vielfältig vorteilhaft einsetzen, ihre Vorteile kommen insbesondere in Bereichen zum Tragen, wo hohe Antriebsdrehmomente zu übertragen sind. Sie zeichnet sich durch eine äußerst kompakte Bauweise mit vorteilhafter, symmetrischer Lagerung der Abtriebswellen aus. Durch den fehlenden Achsversatz ist eine besonders symmetrische Beanspruchung der Lager und tragender Teile gewährleistbar.

### Bezugszeichenliste

- 1: elektrische Antriebsvorrichtung
- 2: Kompaktantrieb
- 4, 4': Elektromotor
- 6, 6': Rotor
- 8, 8': Motorwelle
- 10: erstes Getriebe
- 12, 12': erstes Antriebsritzel
- 14: erstes Sonnenrad
- 16: erste Abtriebswelle
- 18: zweites Getriebe
- 20, 20': zweites Antriebsritzel
- 22: zweites Sonnenrad
- 24: zweite Abtriebswelle
- 26, 27: Freilauf
- 28: Mittelachse
- 30: Hohlwellenantrieb
- 32: Stator
- 34: Rotor/Hohlwelle
- 36: erste Abtriebswelle
- 38: Freilauf
- 40: Freilauf
- 42: Planetengetriebe
- 44: Planetenrad
- 46: zweite Abtriebswelle
- 48: Lagerdeckel
- 50: Mittelachse

## Patentansprüche

1. Elektrische Antriebsvorrichtung umfassend zumindest einen Elektromotor (4, 4', 30), der jeweils einen Rotor (6, 6', 34) aufweist, und mindestens zwei koaxiale Abtriebswellen (16, 24, 36, 46), wobei die Abtriebswellen (16, 24, 36, 46) beim Betrieb des zumindest einen Elektromotors (4, 4', 30) mit unterschiedlichen Drehzahlen antreibbar sind,
**dadurch gekennzeichnet, dass**
die Abtriebswellen (16, 24, 36, 46) jeweils separat mit dem zumindest einen Rotor (6, 6', 34) gekoppelt oder koppelbar sind, und der zumindest eine Rotor (6, 6', 34) mit zumindest einer der Abtriebswellen (16, 24, 36, 46) über ein Getriebe (10, 18, 42) gekoppelt ist, welches keine unmittelbare Wirkverbindung zur jeweils anderen Abtriebswelle (16, 24, 36, 46) besitzt.

2. Elektrische Antriebsvorrichtung nach Anspruch 1,
**dadurch gekennzeichnet, dass**
als Elektromotor ein Hohlwellenantrieb (30) vorgesehen ist.

3. Elektrische Antriebsvorrichtung nach Anspruch 2,
**dadurch gekennzeichnet, dass**
mindestens eine der Abtriebswellen (36, 46) mit dem Rotor (34) unter Zwischenschaltung eines Planetengetriebes (42) verbunden ist.

4. Elektrische Antriebsvorrichtung nach Anspruch 3,
**dadurch gekennzeichnet, dass**
die Planetenräder (44) des Planetengetriebes (42) innerhalb des Rotors (34) ortsfest zu einem Stator (32) des Hohlwellenantriebs (30) gelagert sind.

5. Elektrische Antriebsvorrichtung nach Anspruch 1,
**dadurch gekennzeichnet, dass**
mehrere Elektromotoren (4, 4') symmetrisch um die Achse (28) der Abtriebswellen (16, 24) angeordnet sind, wobei jeder Elektromotor (4, 4') eine Ausgangswelle (8, 8') aufweist, die parallel zu der Achse (28) ausgerichtet ist.

6. Elektrische Antriebsvorrichtung nach Anspruch 5,
**dadurch gekennzeichnet, dass**
jeder Abtriebswelle (16, 24) ein Getriebe (10, 18) unterschiedlicher Übersetzung zugeordnet ist, über das alle Ausgangswellen (8, 8') mit den Abtriebswellen (16, 24) gekoppelt oder koppelbar sind.

7. Elektrische Antriebsvorrichtung nach Anspruch 6,
**dadurch gekennzeichnet, dass**
die Ausgangswellen (8, 8') mit zumindest ersten und zweiten zugeordneten Antriebsritzeln (12, 12', 20, 20') kraftschlüssig verbunden sind, die über Sonnenräder (14, 22) mit den mindestens zwei Abtriebswellen (16, 24) gekoppelt oder koppelbar sind.

8. Elektrische Antriebsvorrichtung nach Anspruch 6 oder 7,
**dadurch gekennzeichnet, dass**
eines oder mehrere der Getriebe (10, 18) zwei- oder mehrstufig ausgeführt ist.

9. Elektrische Antriebsvorrichtung nach einem der Ansprüche 1 bis 8,
**dadurch gekennzeichnet, dass**
ein einziger Frequenzumrichter, der mit der elektrischen Antriebsvorrichtung (1) verbunden ist, zum Antreiben der mindestens zwei Abtriebswellen (16, 24, 36, 46) vorgesehen ist.

10. Elektrische Antriebsvorrichtung nach einem der Ansprüche 1 bis 9,
**dadurch gekennzeichnet, dass**
mindestens eine der Abtriebswellen (16, 24, 36, 46) als Hohlwelle ausgebildet ist.

11. Elektrische Antriebsvorrichtung nach einem der Ansprüche 1 bis 10,
**dadurch gekennzeichnet, dass**
die mindestens zwei Abtriebswellen (16, 24, 36, 46) im Betrieb auf derselben Seite der elektrischen Antriebsvorrichtung (1) kraftübertragend sind.

12. Elektrische Antriebsvorrichtung nach einem der Ansprüche 1 bis 11,
**dadurch gekennzeichnet, dass**
die mindestens zwei Abtriebswellen (16, 24, 36, 46) im Betrieb auf verschiedenen Seiten der elektrischen Antriebsvorrichtung (1) kraftübertragend sind.

13. Elektrische Antriebsvorrichtung nach einem der Ansprüche 1 bis 12,
**dadurch gekennzeichnet, dass**
ein oder mehrere Freiläufe (26, 40) zwischen einer oder mehreren Abtriebswellen (16, 24, 36, 46) und dem zumindest einen Rotor (6, 6', 34) vorgesehen sind, so dass die eine oder mehreren Abtriebswellen (16, 24, 36, 46) nur in Abhängigkeit von der Drehrichtung des mindestens einen Rotors (6, 6', 34) der elektrischen Antriebsvorrichtung (1) antreibbar ist bzw. sind.

14. Elektrische Antriebsvorrichtung nach Anspruch 13,
**dadurch gekennzeichnet, dass**
ein oder mehrere der Freiläufe (26, 40) insbesondere elektrisch oder magnetisch schaltbar ausgestaltet sind.
